# FASCICULE DE BREVET EUROPEEN

(11) **EP 1 453 906 B1**
(45) Date de publication et mention de la délivrance du brevet: **02.04.2008**
(21) Numéro de dépôt: 02796915.3
(22) Date de dépôt: 13.12.2002
(51) Int. Cl.: C08K 5/544, C09D 177/00, C09D 177/02, C09D 5/03, C09D 5/46, C09D 177/06

(54) **PEINTURE EN POUDRE AUTO-ADHERENTE A BASE DE POLYAMIDE ET DE SILANE POUR REVETIR DES METAUX**
SELBSTHAFTENDER PULVERLACK AUF BASIS VON POLYAMID UND SILAN ZUM BESCHICHTEN VON METALLOBERFLÄCHEN
SELF-ADHERING POWDER PAINT BASED ON POLYAMIDE AND SILANE FOR METAL COATING

(30) Priorité: 14.12.2001 FR 0116216
(43) Date de publication de la demande: 08.09.2004
(73) Titulaire: ARKEMA FRANCE, 92700 Colombes (FR)
(72) Inventeur: AUDENAERT, Marc, F-27300 Bernay (FR); HUZE, Denis, F-27120 Fontaine sous Jouy (FR); RASTALLETTI, Emmanuel, F-69200 Venissieux (FR)
(74) Mandataire: Mouttet, Marie-Paule
(86) Numéro de dépôt international: PCT/FR2002/004355
(87) Numéro de publication internationale: WO 2003/054074

(56) Documents cités:
- FR-A- 2 245 577

## Description

### [domaine de l'invention]

La présente invention concerne l'utilisation d'une peinture poudre auto-adhérente à base de polyamide et de silane pour revêtir des métaux. Cette peinture poudre est utile pour recouvrir des objets en métal. Elle est utile dans les procédés de recouvrement d'un objet par un film provenant de la fusion d'une mince couche de poudre préalablement déposée sur l'objet.

Il existe actuellement à l'échelle industrielle plusieurs procédés de recouvrement d'un objet.

Le premier procédé est le poudrage électrostatique, il consiste à charger la poudre d'électricité statique et à la mettre en contact avec l'objet à recouvrir relié à un potentiel zéro. Par exemple la poudre est injectée dans un pistolet électrostatique qui va charger la dite poudre par effet Corona (aussi appelé effet couronne), par triboélectrification ou par combinaison des deux. La poudre ainsi chargée est projetée sur l'objet à recouvrir relié à un potentiel zéro. Selon une autre forme de poudrage électrostatique on trempe l'objet relié à un potentiel zéro dans un lit fluidisé de poudre chargée. A l'intérieur du lit fluidisé se trouve de la poudre dont on veut recouvrir l'objet. Cette poudre est sous la forme de particules solides de faible taille, par exemple entre 0.01 et 1 mm, de forme quelconque, qui sont en état de fluidisation à l'intérieur du lit en présence d'air ou de tout autre gaz. Dans le lit fluidisé il existe des électrodes pour charger la poudre par effet corona ou un dispositif pour la charger par effet triboélectrique. L'objet recouvert de poudre est ensuite placé dans un four à une température suffisante pour assurer un revêtement par fusion de la poudre provoquant la filmification. Par exemple pour une poudre de polyamide 11 il suffit de chauffer à 220°C.

Le deuxième procédé consiste à préchauffer l'objet à recouvrir à une température supérieure à la température de fusion de la poudre. Une fois chaud, l'objet est immédiatement immergé dans un lit fluidisé de la poudre, la poudre fond au contact de l'objet chaud et filmifie. Un recouvrement solide est ainsi assuré.

La peinture poudre de la présente invention est utile dans les deux procédés.

### [L'art antérieur et le problème technique]

L'invention se rapporte au domaine des revêtements en polyamide haute performance assurant une protection anticorrosion des métaux, et plus particulièrement aux peintures poudres appliquées soit par un procédé électrostatique soit par trempage. De manière générale, les peintures poudres polyamide subissent une décharge électrostatique plus rapide que les peintures poudres époxy lorsqu'elles sont en contact avec le métal à revêtir. Ceci a pour effet de provoquer un décrochage d'une partie de la poudre déposée électrostatiquement sur le métal au moment où la pièce métallique à revêtir subit un choc. De plus dès qu'on commence à chauffer le métal recouvert de poudre il se produit une relaxation des charges et selon la nature de l'objet à recouvrir et sa géométrie une partie de la poudre peut se détacher avant d'avoir fondu et formé le film.

Par ailleurs, d'une manière générale, l'adhérence des revêtements polyamides décroît rapidement lorsque ceux-ci sont exposés à une atmosphère de brouillard salin.

Dans le brevet EP 969053 on modifie la poudre de polyamide en la mélangeant avec des cires de polyoléfines de température de fusion de l'ordre de 110 à 120°C. Ainsi les poudres déposées par voie électrostatique sur une surface métallique se décrochent moins facilement.

L'art antérieur a déjà cité dans les brevets qui suivent des poudres de polyamide modifiées mais ces compositions ont pour but essentiel d'éviter un primaire.

Dans le brevet US 5409999 on décrit des poudres de polyamide modifiées par des résines époxy sulfonamides. On mélange ces résines avec le polyamide à l'état fondu, on granule puis on broye pour obtenir une poudre. Cette poudre est ensuite appliquée sur un objet selon un procédé électrostatique ou selon un procédé de trempage puis fondue pour faire un film. Dans cet art antérieur on explique que l'avantage de cette poudre est d'éviter l'utilisation d'un primaire et donc qu'on peut l'appliquer directement sur un objet.

Le brevet US 6027814 décrit une technique similaire à la précédente mais c'est une poudre de polyamide modifiée soit par des copolymères EVOH (copolymère de l'éthylène et de l'alcool vinylique) soit par des copolymères éthylène-(meth)acrylate d'alkyle-anhydride maleique.

Le brevet US 6011100 décrit une technique similaire à celle du brevet US 5409999 cité plus haut mais c'est une poudre modifiée par du carbonate de calcium.

On a maintenant trouvé qu'en modifiant des poudres de polyamide par des silanes on obtient une peinture poudre polyamide qu'on peut appliquer sans primaire d'adhérence, tout en obtenant (dans le cas du procédé electrostatique) une diminution importante de la quantité de poudre susceptible de se décrocher du métal au moment d'un choc appliqué sur la pièce métallique.

Un autre avantage de cette poudre est que l'adhérence reste constante pendant 2000 heures d'exposition au brouillard salin.

L'art antérieur a déjà décrit des traitements de poudres avec des silanes mais ce n'était pas des poudres de polyamide. Ainsi le brevet GB 1508587 décrit le depot électrostatique de poudres de verre ou de céramique chargées pour faire des revêtements sur des objets. Ces poudres sont d'abord traitées par un di ou trihalosilane en phase gazeuse puis la poudre traitée est ensuite mise en contact avec de la vapeur d'eau. Le di ou trihalosilane est le dichlorodiméthylsilane ou le trichloromethylsilane. Il est écrit en page 3 lignes 54-61 que ce traitement au di ou trihalosilane a pour résultat de donner aux particules ainsi traitées une resistivité de surface comparable à celle du nylon (c'est à dire du polyamide). Ceci n'a donc rien à voir avec la présente invention puisque son but est de modifier les polyamides.

### [Brève description de l'invention]

La présente invention concerne l'utilisation d'une poudre comprenant 99,95 à 95% d'au moins un polyamide et 0,05 à 5% d'au moins un silane pour revêtir des métaux.

Cette poudre peut être préparée par simple mélange à sec (dry blend) des constituants.

On peut aussi ajouter le silane dans le polyamide à l'état fondu dans un dispositif de mélange et réduire le produit obtenu sous forme de poudre.

L'addition d'un silane permet d'améliorer notablement l'application électrostatique en évitant la chute d'une partie importante de la poudre lors de la décharge électrostatique qui suit l'application, tout en procurant au revêtement une adhérence durable sur le métal.

On observe aussi une meilleure adhérence sur le métal en cas d'application par trempage.

La présente invention concerne aussi un procédé de recouvrement d'un objet par un film provenant de la fusion d'une mince couche de poudre dans lequel :
(a) on dispose de la poudre silanée précédente électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

La présente invention concerne aussi un procédé de recouvrement d'un objet par un film provenant de la fusion d'une mince couche de poudre dans lequel :
(a) on dispose de la poudre silanée précédente en lit fluidisé,
(b) on chauffe l'objet à recouvrir à une température suffisante pour que la poudre fonde à son contact,
(c) on trempe l'objet dans le lit fluidisé un temps suffisant pour qu'il se recouvre de poudre,
(d) on retire l'objet du lit fluidisé.

### [Description détaillée de l'invention]

**S'agissant du polyamide** on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de plusieurs de ces monomères ce qui conduit à des copolyamides. On utilise avantageusement le PA 11 et le PA 12.

**S'agissant du silane** on peut citer à titre d'exemple les aminosilanes. Parmi les aminosilanes on préfère ceux ayant des fonctions alkoxysilanes. On désigne ainsi tout produit ayant une fonction amine et une fonction alkoxysilane. A titre d'exemple on peut citer les produits de formule (1) suivante : 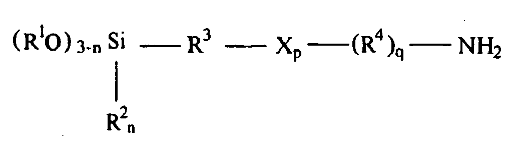 dans laquelle :
- R1 désigne un groupe alkyle ayant de 1 à 8 atomes de carbone ou un groupe alkyle ayant de 2 à 8 atomes de carbone et contenant un atome d'oxygène à l'intérieur de sa chaîne,
- n vaut 0 ou 1,
- R2 désigne H ou un groupe alkyle ayant de 1 à 8 atomes de carbone,
- R3 désigne alkyle ayant de 1 à 8 atomes de carbone ou un groupe aryle ou cycloalkyle ou encore un groupe arylalkyle,
- X désigne 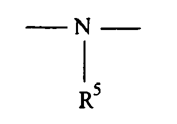
- R5 désigne H ou un groupe alkyle ayant de 1 à 8 atomes de carbone,
- p vaut 0 ou 1,
- R4 désigne un alkyle ayant de 1 à 8 atomes de carbone,
- q vaut 0 ou 1 avec la condition que si q vaut 0 alors p vaut 0,

Avantageusement l'aminosilane est choisi parmi l'aminopropyltriethoxysilane et l'aminopropyltrimethoxysilane.

**S'agissant de la préparation de la poudre de polyamide modifiée par le silane** elle peut être effectuée par simple mélange à sec (dry blend) des constituants. La poudre de polyamide a une granulométrie pouvant varier de 10 à 1000 µm. L'expression "mélange à sec" est utilisée par opposition à un mélange dans lequel le polyamide est à l'état fondu parce qu'en fait la plupart des silanes et particulièrement les aminosilanes sont liquides dans les conditions normales. On peut utiliser les mélangeurs habituels des produits en poudre, par exemple le Henschel®. Le mélange se fait à température et pression normale. La durée de mélange doit être suffisante pour que le silane se fixe sur le polyamide, cette durée peut être comprise entre 2 et 15 minutes.

La concentration de silane est avantageusement comprise entre 0,05 et 2% pour respectivement 99,95 et 98% de polyamide. La concentration de silane est de préférence comprise entre 0,3 et 0,8% pour respectivement 99,7 et 99,2% de polyamide. Elle peut être inférieure, mais dans ce cas les effets intéressants de l'invention s'amenuisent lorsque la concentration diminue à 0,2 et 0,1%. Si la concentration de silane dépasse 0,4 ou 0,5% il est recommandé d'ajouter un peu d'eau au cours du mélange du polyamide et du silane.

On peut aussi ajouter le silane dans le polyamide à l'état fondu dans un dispositif de mélange et réduire le produit obtenu sous forme de poudre. La durée de mélange doit être suffisante pour que le silane se fixe sur le polyamide, cette durée peut être comprise entre 2 et 15 minutes. On utilise par exemple une extrudeuse. Puis le produit récupéré sous forme de granulés en sortie d'extrudeuse est ensuite broyé à la même granulométrie citée pour la poudre de polyamide utilisée dans le procédé en dry blend.

La poudre de l'invention peut comprendre aussi des additifs anti UV, des antioxydants, des colorants, des pigments, des ignifugeants, des bactericides, etc... Ces produits sont de préférence incorporés dans le polyamide avant l'ajout du silane.

**S'agissant des métaux qu'on veut revêtir** à titre d'exemple on peut citer l'aluminium, les alliages d'aluminium, l'acier et ses alliages. Éventuellement un pré traitement de surface est effectué sur l'objet avant de le recouvrir de poudre. Il s'agit des pré traitements classiques utilisés dans l'industrie du revêtement: phosphatage, dégraissage, grenaillage.

**Ensuite on applique cette poudre sur la surface métallique** puis on chauffe pour filmifier la poudre. Cette technique est connue en elle même. Par exemple une poudre de PA 11 ne contenant pas de silane est appliquée à l'aide d'un pistolet électrostatique à effet CORONA, avec une tension négative de -30 KV, sur une plaque en acier lisse. Après l'application, on attend deux minutes; puis on applique au milieu de la face arrière de la plaque un choc à l'aide d'une masselotte accrochée à un pendule. L'intensité du choc est ainsi maîtrisée. On mesure la quantité de poudre qui s'est décrochée de la plaque lors du choc. Environ 75% de la poudre se décroche. On réalise le même essai avec la poudre de même composition à laquelle on a ajouté 0,3% d'aminopropyltriethoxysilane en dry-blend. Dans ce cas, environ 25% de la poudre se décroche.

Les revêtements obtenus après avoir fondu le polyamide à 220°C pendant 7 minutes sont exposés à une atmosphère de brouillard salin pendant 2000 heures. Dans le cas du produit qui ne contient pas le silane, l'adhérence, mesurée sur une échelle allant de 0 à 4 (suivant NFT 58-112), décroît rapidement jusqu'à 1 au bout de 230 heures d'exposition. Dans le cas du polyamide de même composition mais contenant 0,3% d'aminopropyltriethoxysilane, l'adhérence reste constante et égale à 3,5 jusqu'à 2000 heures d'exposition.

L'aminopropyltriethoxysilane, ajouté comme additif par mélange à sec, permet donc d'obtenir à la fois des propriétés électrostatiques améliorées, évitant le décrochage de la poudre, et une adhérence du film de revêtement obtenu après cuisson conservée au cours d'une longue période d'exposition à une atmosphère particulièrement corrosive.

**S'agissant du moyen pour charger ces poudres** on peut utiliser l'effet corona, la triboelectrification et l'induction. La charge par triboelectrification est connue en elle même et a déjà été décrite dans l'art antérieur. La poudre peut être déposée sur l'objet par la technique du lit fluidisé ou par un pistolet électrostatique.

Dans la publication " Triboelectrification of polymer powders in a fluidised Bed", Power Engineering ; Journal of the Academy of Science of the USSR Vol 19, n° 6 page 75-83, on décrit un système de charge triboélectrique assisté par des électrodes reliées à une haute tension.

Dans la publication " Charge of powdered paint according to a triboelectric mechanism during its fluidisation ", Journal Lakokras, Mater. IKH Primen (1979), (4), 30-2, il est décrit la charge triboélectrique dans un lit fluidisé classique sur les parois de la cuve.

Dans le brevet WO 0076677 la poudre est tribochargée, c'est-à-dire chargée par contact ou frottement. Le frottement est assuré par l'air ou le gaz de fluidisation qui entraîne les particules de poudre et permet à celles-ci de venir en contact avec les systèmes tribochargeurs qui seront décrits par la suite. Le système de charge décrit dans la présente demande est autonome et ne nécessite pas d'apport énergétique autre que le gaz assurant la mise en fluidisation de la poudre.

Avantageusement on utilise comme dispositif tribochargeur un "nid d'abeille". Il s'agit d'une structure composée d'éléments géométriques dont la section peut aller de tout type de polygone (les éléments sont alors des prismes) jusqu'au cercle (les éléments sont alors des tubes). Ces éléments sont creux, disposés verticalement et présentent une épaisseur de préférence comprise entre 1 et 10 mm ; leur longueur est par exemple comprise entre 15 et 25 cm. Ces tubes sont accolés les uns aux autres de façon à constituer un ensemble solide et homogène. Les interstices entre tubes sont bouchés par un moyen quelconque comme des feuilles d'aluminium. Bien que tout type de section polygonale puisse être envisagé, la structure cylindrique est préférentielle. Une géométrie cylindrique est préférée de manière à permettre une fluidisation homogène. Des effets de bord seront limités par une longueur adaptée des tubes constitutifs du nid d'abeille c'est à dire que ces tubes sont avantageusement supérieurs à 15 cm de longueur.

Ce " nid d'abeille " est disposé au fond du lit. Il faut laisser suffisamment de place en haut du lit pour immerger l'objet et disposer autour du dit objet d'une densité volumique de charge suffisante pour assurer l'électrodéposition.

Le « nid d'abeille » est placé le plus bas possible dans le lit, de façon à optimiser le contact dans les tubes sans toutefois perturber la fluidisation.

Le diamètre des tubes est choisi le plus faible possible afin d'accroître la surface de contact, mais il faut quand même s'assurer que les tubes ne vont pas se boucher et sont donc suffisamment larges pour assurer une fluidisation correcte. Plus ces tubes sont longs, meilleure sera la charge électrique générée sur les particules de poudres, cependant on est limité par l'espace à laisser pour le trempage de l'article. A titre d'exemple on peut utiliser des tubes de diamètre 25 mm et de longueur 150 mm. Ils sont avantageusement en PVC ou PTFE.

On peut aussi utiliser un tube tribochargeur à circulation forcée. Le terme "à circulation forcée" est employé par opposition à la circulation dans les tubes du nid d'abeille qui ne se fait que par le débit du gaz de fluidisation du lit. On entend par "circulation forcée" qu'une partie du contenu du lit fluidisé c'est à dire un mélange de gaz de fluidisation et de poudre est prélevée et à l'aide d'une pompe ou d'un dispositif équivalent tel qu'un éjecteur à gaz (fonctionnant de préférence avec le même gaz que le lit fluidisé) et passe dans un ou plusieurs tubes tribochargeurs. De préférence la pompe et le tube tribochargeur sont à l'extérieur du lit pour ne pas perturber son fonctionnement, le gaz et la poudre tribochargée après avoir traversé le tube tribochargeur sont renvoyés dans le lit fluidisé.

On peut aussi utiliser un pistolet tribochargeur ou à effet couronne pour déposer la poudre sur l'objet.

Le principe de tribocharger des poudres à l'aide d'un pistolet dans lequel on fait circuler la poudre à charger sous l'effet d'un courant de gaz est connu par le brevet US 4399945. Les particules se chargent par frottement sur une surface, un système de mise à la terre permet d'évacuer les charges.

Le brevet US 5622313 décrit un perfectionnement du précédent c'est à dire que pour éliminer les charges de la surface de tribocharge on la traite par effet corona. Les charges apportées par l'effet corona non seulement neutralisent les charges accumulées sur la surface de tribocharge mais passent aussi dans la poudre et s'ajoutent donc aux charges crées par effet triboélectrique.

On a aussi découvert que les poudres de l'invention avaient une plus grande facilité à être tribochargées par comparaison avec les poudres ne contenant pas de silane. En utilisant les mêmes conditions de tribocharge on constate que les poudres de l'invention portaient une charge électrique 5 à 8 fois plus importante que les mêmes poudres mais ne contenant pas de silanes.

**Une fois l'objet recouvert**, il est amené dans un four où une cuisson est assurée. Suivant la géométrie de l'objet, les propriétés de la poudre et la cadence de production souhaitée, on peut utiliser un four à convection, à infrarouge ou à induction. Cette étape du procédé est connue en elle même et a déjà été décrite dans l'art antérieur.

On peut aussi utiliser le procédé par trempage. Ce procédé est connu en lui même et a déjà été décrit dans l'art antérieur.

### [Exemples]

On a utilisé les produits suivants:

RILSAN ES ab: désigne une poudre de PA 11 de granulométrie 35 µm et contenant 40% en poids de carbonate de calcium.

AMEO : désigne l'aminopropyltriethoxysilane.

### Exemple 1:

### Mesure des propriétés électrostatiques

Un RILSAN ES ab est appliqué sur une plaque en acier lisse au moyen d'un pistolet électrostatique à effet CORONA.

Un RILSAN ES ab, auquel on ajoute 0,3% d'AMEO par un procédé dry-blend, est appliqué sur une autre plaque en acier lisse en utilisant le même procédé.

Le poids de la plaque est mesurée avant et après l'application de la poudre.

Plusieurs minutes plus tard, on fait subir à la plaque un choc dans le but de tenter de décrocher la poudre qui adhère à l'acier par effet électrostatique. On mesure à nouveau le poids de la plaque. On détermine de cette façon le poids de poudre qui s'est décrochée de l'acier sous l'effet du choc.

| Produit | % de poudre qui s'est décrochée après 2 minutes | % de poudre qui s'est décrochée après 3 minutes |
|---|---|---|
| RILSAN ES ab | 75 | 95 |
| RILSAN ES ab +0,3% AMEO | 25 | 25 |

### Exemple 2 :

### Mesure de l'adhérence après exposition au brouillard salin

Les deux poudres de l'exemple 1 sont appliquées sur des plaques en acier dégraissées au trichloroéthylène et grenaillées ne comportant pas de primaire d'adhérence.

Les plaques sont placées dans un four à 220°C pendant 7 minutes. Ensuite, elles sont sorties du four et refroidies à l'air. L'aspect des revêtements obtenus est identique pour les deux poudres. L'adhérence initiale est mesurée suivant la norme NFT 58-112. Une note allant de 0 à 4 caractérise l'adhérence.

Les plaques revêtues sont placées dans un appareil permettant d'exposer les revêtements à une atmosphère de brouillard salin (BS). Les plaques revêtues sont sorties ensuite de l'appareil et l'adhérence est mesurée. Les résultats suivants sont obtenus.

| Produit | Adhérence après 1000 h de BS | Adhérence après 2000 h de BS |
|---|---|---|
| RILSAN ES ab | 0,5 | 0,5 |
| RILSAN ES ab +0,3% AMEO | 3,5 | 3,5 |

### Exemple 3 :

### Mesure de l'adhérence après exposition au brouillard salin en fonction de la concentration d'AMEO

Deux autres poudres polyamide à base de RILSAN ES ab sont préparées en additionnant à l'une 0,1 % d'AMEO et à l'autre 0,2% d'AMEO, en utilisant le procédé dry-blend. Les revêtements obtenus, après application électrostatique de la poudre et fusion à 220°C pendant 7 minutes, sont exposés au brouillard salin. Les résultats suivants sont observés.

| Produit | Adhérence après 1000hdeBS |
|---|---|
| RILSAN ES ab +0,1% AMEO | 1 |
| RILSAN ES ab +0,2% AMEO | 2 |

## Revendications

1. Utilisation d'une poudre comprenant 99,95 à 95% d'au moins un polyamide et 0,05 à 5% d'au moins un silane pour revêtir du métal

2. Utilisation selon la revendication 1 **caractérisée en ce que** le métal est choisi parmi l'aluminium, les alliages d'aluminium, l'acier et ses alliages.

3. Utilisation selon la revendication 1 ou 2 dans laquelle la concentration de silane est comprise entre 0,05 et 2% pour respectivement 99,95 et 98% de polyamide.

4. Utilisation selon les revendications 1 à 3 dans laquelle la granulométrie de la poudre est comprise entre 10 et 1000 µm.

5. Utilisation selon l'une quelconque des revendications précédentes dans laquelle le polyamide est le PA 11 ou le PA 12.

6. Utilisation selon l'une quelconque des revendications précédentes dans laquelle le silane est un aminosilane.

7. Utilisation selon la revendication 6 dans laquelle l'aminosilane contient des fonctions alkoxysilanes.

8. Utilisation selon la revendication 6 ou 7 dans laquelle l'aminosilane est de formule suivante: 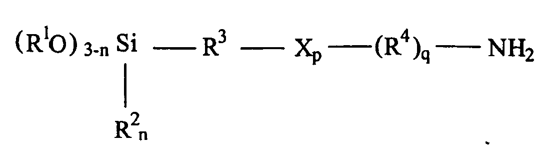 dans laquelle :
• R1 désigne un groupe alkyle ayant de 1 à 8 atomes de carbone ou un groupe alkyle ayant de 2 à 8 atomes de carbone et contenant un atome d'oxygène à l'intérieur de sa chaîne,
• n vaut 0 ou 1,
• R2 désigne H ou un groupe alkyle ayant de 1 à 8 atomes de carbone,
• R3 désigne un groupe alkyle ayant de 1 à 8 atomes de carbone ou un groupe aryle ou cycloalkyle ou encore un groupe arylalkyle,
• X désigne 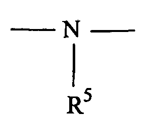
• R5 désigne H ou un groupe alkyle ayant de 1 à 8 atomes de carbone,
• p vaut 0 ou 1,
• R4 désigne un alkyle ayant de 1 à 8 atomes de carbone,
• q vaut 0 ou 1 avec la condition que si q vaut 0 alors p vaut 0.

9. Utilisation selon l'une quelconque des revendications précédentes dans laquelle la concentration de silane est comprise entre 0,3 et 0,8% pour respectivement 99,7 et 99,2% de polyamide.

10. Procédé de recouvrement d'un métal par un film provenant de la fusion d'une mince couche de poudre comprenant 99,95 à 95% d'au moins un polyamide et 0,05 à 5% d'au moins un silane dans lequel :
(a) on dispose de la poudre silanée électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

11. Procédé de recouvrement de métaux par un film provenant de la fusion d'une couche de poudre comprenant 99,95 à 95% d'au moins un polyamide et 0,05 à 5% d'au moins un silane dans lequel :
(a) on dispose ladite poudre silanée en lit fluidisé,
(b) on chauffe le métal à recouvrir à une température suffisante pour que ladite poudre fonde à son contact,
(c) on trempe le métal dans le lit fluidisé un temps suffisant pour qu'il se recouvre de poudre,
(d) on retire le métal du lit fluidisé.

## Claims

1. Use of a powder comprising 99.95 to 95% of at least one polyamide and 0.05 to 5% of at least one silane for coating metal.

2. Use according to Claim 1, **characterized in that** the metal is chosen from aluminium, aluminium alloys, steel and its alloys.

3. Use according to Claim 1 or 2, in which the silane concentration is between 0.05 and 2% in the case of 99.95 and 98% of polyamide, respectively.

4. Use according to Claims 1 to 3, in which the particle size of the powder is between 10 and 1000 µm.

5. Use according to any one of the preceding claims, in which the polyamide is PA-11 or PA-12.

6. Use according to any one of the preceding claims, in which the silane is an aminosilane.

7. Use according to Claim 6, in which the aminosilane contains alkoxysilane functional groups.

8. Use according to Claim 6 or 7, in which the aminosilane has the following formula: 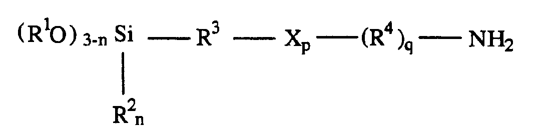 in which:
• R1 denotes an alkyl group having from 1 to 8 carbon atoms or an alkyl group having from 2 to 8 carbon atoms and containing an oxygen atom within its chain;
• n is 0 or 1;
• R2 denotes H or an alkyl group having from 1 to 8 carbon atoms;
• R3 denotes an alkyl group having from 1 to 8 carbon atoms or an aryl or cycloalkyl group or an arylalkyl group;
• X denotes 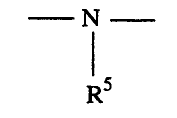
• R5 denotes H or an alkyl group having from 1 to 8 carbon atoms;
• p is 0 or 1,
• R4 denotes an alkyl having from 1 to 8 carbon atoms; and
• q is 0 or 1, with the condition that if q is 0 then p is 0.

9. Use according to any one of the preceding claims, in which the silane concentration is between 0.3 and 0.8% in the case of 99.7 and 99.2% of polyamide, respectively.

10. Method of covering a metal with a film resulting from the melting of a thin layer of powder comprising 99.95 to 95% of at least one polyamide and 0.05 to 5% of at least one silane, in which:
(a) silanized powder is used in electrified form, this powder having been charged by any means;
(b) the object is brought close to the powder or the object is brought into contact with the powder, the object being connected to zero potential or a potential sufficient to cover it with powder; and
(c) the object covered with the powder is then placed in an oven at a temperature high enough to obtain the coating film by melting the powder.

11. Method of covering metals with a film resulting from the melting of a layer of powder comprising 99.95 to 95% of at least one polyamide and 0.05 to 5% of at least one silane, in which:
(a) said silanated powder is disposed as a fluidized bed;
(b) the metal to be covered is heated to a temperature sufficient for said powder to melt upon contact with it;
(c) the metal is immersed in the fluidized bed for a time long enough for it to be covered with powder; and
(d) the metal is withdrawn from the fluidized bed.

## Patentansprüche

1. Verwendung eines Pulvers, das 99,95 bis 95 % mindestens eines Polyamids sowie 0,05 bis 5 % mindestens eines Silans umfasst, zur Beschichtung von Metall.

2. Verwendung gemäß Anspruch 1, **dadurch gekennzeichnet, dass** das Metall aus Aluminium, Aluminiumlegierungen sowie Stahl und dessen Legierungen gewählt ist.

3. Verwendung gemäß Anspruch 1 oder 2, wobei die Konzentration an Silan zwischen 0,05 und 2 % bei 99,95 beziehungsweise 98 % an Polyamid liegt.

4. Verwendung gemäß den Ansprüchen 1 bis 3, wobei die Körnung des Pulvers zwischen 10 und 1.000 µm liegt.

5. Verwendung gemäß einem beliebigen der vorhergehenden Ansprüche, wobei es sich bei dem Polyamid um PA 11 oder PA 12 handelt.

6. Verwendung gemäß einem beliebigen der vorhergehenden Ansprüche, wobei es sich bei dem Silan um ein Aminosilan handelt.

7. Verwendung gemäß Anspruch 6, wobei das Aminosilan funktionelle Alkoxysilangruppen enthält.

8. Verwendung gemäß Anspruch 6 oder 7, wobei das Aminosilan der folgenden Formel entspricht: 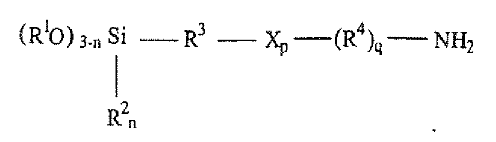 wobei:
- R1 für eine Alkylgruppe mit 1 bis 8 Kohlenstoffatomen oder für eine Alkylgruppe mit 2 bis 8 Kohlenstoffatomen, deren Kette ein nicht endständiges Sauerstoffatom enthält, steht,
- n die Werte 0 oder 1 annimmt,
- R2 für H oder für eine Alkylgruppe mit 1 bis 8 Kohlenstoffatomen steht,
- R3 für eine Alkylgruppe mit 1 bis 8 Kohlenstoffatomen oder für eine Aryl- oder Cycloalkylgruppe oder aber für eine Arylalkylgruppe steht,
- X für Folgendes steht: 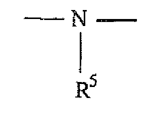
- R5 für H oder für eine Alkylgruppe mit 1 bis 8 Kohlenstoffatomen steht,
- p die Werte 0 oder 1 annimmt,
- R4 für eine Alkylgruppe mit 1 bis 8 Kohlenstoffatomen steht,
- q die Werte 0 oder 1 annimmt, mit der Maßgabe, dass auch p gleich 0 ist, wenn q gleich 0 ist.

9. Verwendung gemäß einem beliebigen der vorhergehenden Ansprüche, wobei die Konzentration an Silan zwischen 0,3 und 0,8 % bei 99,7 beziehungsweise 99,2 % an Polyamid liegt.

10. Verfahren zur Beschichtung von Metall mit einem Film, der durch Schmelzen einer Pulverdünnschicht entsteht, die 99,95 bis 95 % mindestens eines Polyamids sowie 0,05 bis 5 % mindestens eines Silans umfasst, wobei:
(a) das elektrisch geladene silanhaltige Pulver vorgelegt wird, wobei die Aufladung des Pulvers mit einem beliebigen Mittel erfolgte,
(b) der Gegenstand in die Nähe des Pulvers gebracht wird oder der Gegenstand und das Pulver in Kontakt gebracht werden, wobei der Gegenstand mit einem Nullpotential in Verbindung steht, oder mit einem, welches ausreicht, um ihn mit Pulver zu beschichten,
(c) der mit Pulver beschichtete Gegenstand anschließend in einen Ofen mit einer Temperatur gegeben wird, die ausreicht, um durch Schmelzen des Pulvers den Beschichtungsfilm zu erhalten.

11. Verfahren zur Beschichtung von Metall mit einem Film, der durch Schmelzen einer Pulverschicht entsteht, welche 99,95 bis 95 % mindestens eines Polyamids sowie 0,05 bis 5 % mindestens eines Silans umfasst, wobei:
(a) das silanhaltige Pulver als Fließbett vorgelegt wird,
(b) das zu beschichtende Metall auf eine Temperatur erwärmt wird, die ausreicht, um das Pulver bei Berührung mit dem Metall zum Schmelzen zu bringen,
(c) das Metall für eine Zeitdauer in das Fließbett eingetaucht wird, die ausreicht, um das Metall mit dem Pulver zu beschichten,
(d) das Metall aus dem Fließbett entnommen wird.
